## Europäisches Patentamt

## European Patent Office

## Office européen des brevets

(19)

(11) Veröffentlichungsnummer: **0 039 777**
**A2**

(12) **EUROPÄISCHE PATENTANMELDUNG**

(21) Anmeldenummer: **81102559.2**

(22) Anmeldetag: **04.04.81**

(51) Int. Cl.³: **H 02 K 49/06**

(30) Priorität: **13.05.80 DE 3018186**

(43) Veröffentlichungstag der Anmeldung:
**18.11.81 Patentblatt 81/46**

(84) Benannte Vertragsstaaten:
**CH FR GB LI NL**

(71) Anmelder: **Thyssen Edelstahlwerke AG**
**Thyssenstrasse 1**
**D-4000 Düsseldorf(DE)**

(72) Erfinder: **Sobottka, Gert, Dr.-Ing.**
**Gräfin-Kielmanseggestrasse 4**
**D-4670 Cappenberg(DE)**

(72) Erfinder: **Hübner, Klaus-Dieter, Dr.-Ing.**
**Lenaustrasse 14**
**D-3300 Braunschweig(DE)**

(54) **Synchronkupplung.**

(57) Die Erfindung betrifft eine Synchronkupplung, bestehend aus zwei mit Dauermagneten bestückten, im Abstand voneinander angeordneten, relativ zueinander drehbaren Teilen, von denen eines mit dem Antrieb und das andere mit dem Abtrieb verbunden ist. Erfindungsgemäß soll die tatsächliche Polbedeckung $\varphi_M$ der Teil (1,2) mit Dauermagneten (3) kleiner sein als die Polteilungswinkel $\varphi_P = 360°/2p$ mit p als Poolpaarzahl.

EP 0 039 777 A2

Croydon Printing Company Ltd.

Synchronkupplung

Die Erfindung betrifft eine Synchronkupplung, bestehend aus zwei mit Dauermagneten bestückten, im Abstand voneinander angeordneten, relativ zueinander drehbaren Teilen, von denen eines mit dem Antrieb und das andere mit dem Abtrieb verbunden ist.

Synchronkupplungen werden in der Bauweise als Zentraldrehkupplung oder als Stirndrehkupplung ausgeführt. Bisher wurden permanent erregte Kupplungen in beiden Bauformen jeweils auf der ganzen Umfangsfläche durchgehend mit Dauermagnetmaterial bestückt, d.h., der Polteilungswinkel mit Dauermagnetmaterial war gleich der tatsächlichen Polbedeckung. Maximale Belegung der Kupplungsteile mit Dauermagnetmaterial ermöglicht die Übertragung des maximalen Drehmoments der Magnetkupplung. Hierbei ist aber der Einsatz von Dauermagnetmaterial nicht optimal. Durch Streuflüsse im Randbereich der Dauermagnete kommt es zu Verlusten von magnetischem Fluß.

Aufgabe der vorliegenden Erfindung ist nun die Schaffung einer magnetischen Synchronkupplung mit optimalem Einsatz an Dauermagnetmaterial. Insbesondere bei Einsatz von hochwertigem teuren Dauermagnetmaterial ist dessen optimale Ausnutzung bei vorgegebenem zu übertragenen Drehmoment von besonderer wirtschaftlicher Bedeutung.

Zur Lösung der gestellten Aufgabe wird eine Synchronkupplung der eingangs genannten Art mit den in den Ansprüchen gekennzeichneten Merkmalen vorgeschlagen.

Wie sich durch Untersuchungen gezeigt hat, ergibt sich ein minimaler Einsatz von Dauermagnetvolumen, bezogen auf das maximal zu übertragende Drehmoment dann, wenn keine kontinuierliche Dauermagnetbelegung der Kupplungsteile längs ihres Umfangs vorgenommen wird, sondern die tatsächliche Bedeckung der Teile mit Dauermagnetmaterial kleiner gewählt wird als der Polteilungswinkel. Neben der Verminderung der durch Streufelder entstehenden Verluste können auch die Wirbelstromverluste vermindert werden, die bei Anwesenheit von Zwischenwänden aus elektrisch leitfähigem Material zwischen den Kupplungsteilen entstehen.

In der Zeichnung sind zwei Ausführungsbeispiele von Synchronkupplungen mit dem erfindungsgemäßen Merkmal dargestellt.

Fig. 1 zeigt im Längsschnitt und

Fig. 2 im Querschnitt eine Zentraldrehkupplung und

Fig. 3 im Längsschnitt und

Fig. 4 im Querschnitt eine Stirndrehkupplung.

Gleiche Teile sind in den Figuren mit denselben Bezugszeichen versehen.

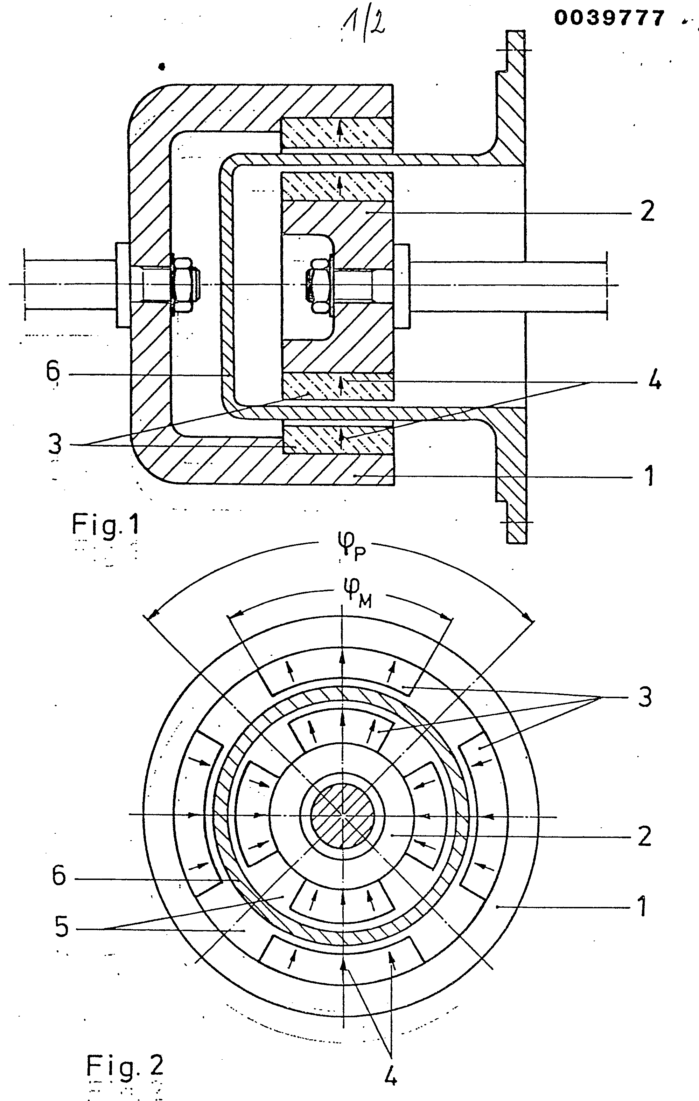

Bei der Zentraldrehkupplung gemäß Figuren 1 und 2 sind an den Kupplungsteilen 1, 2, die im Abstand voneinander relativ zueinander drehbar angeordnet sind, Dauermagnete 3 befestigt. Durch Pfeile 4 ist die Magnetisierungsrichtung der Dauermagnete 3 gekennzeichnet.

Wie am besten aus Fig. 2 ersichtlich ist, stehen die Dauermagnete 3 jeweils auf den Kupplungsteilen 1, 2 unter Bildung von Zwischenräumen 5 auf Abstand zueinander. Der Polteilungswinkel ist mit $\varphi_p$ und die tatsächliche Polbedeckung mit $\varphi_M$ in Fig. 2 gekennzeichnet. Dabei ist $\varphi_M$ jeweils kleiner als $\varphi_p$.

Zwischen den Kupplungsteilen 1, 2 kann gegebenenfalls ein Spaltrohr 6 als Trennwand zweier Arbeitsräume angeordnet werden.

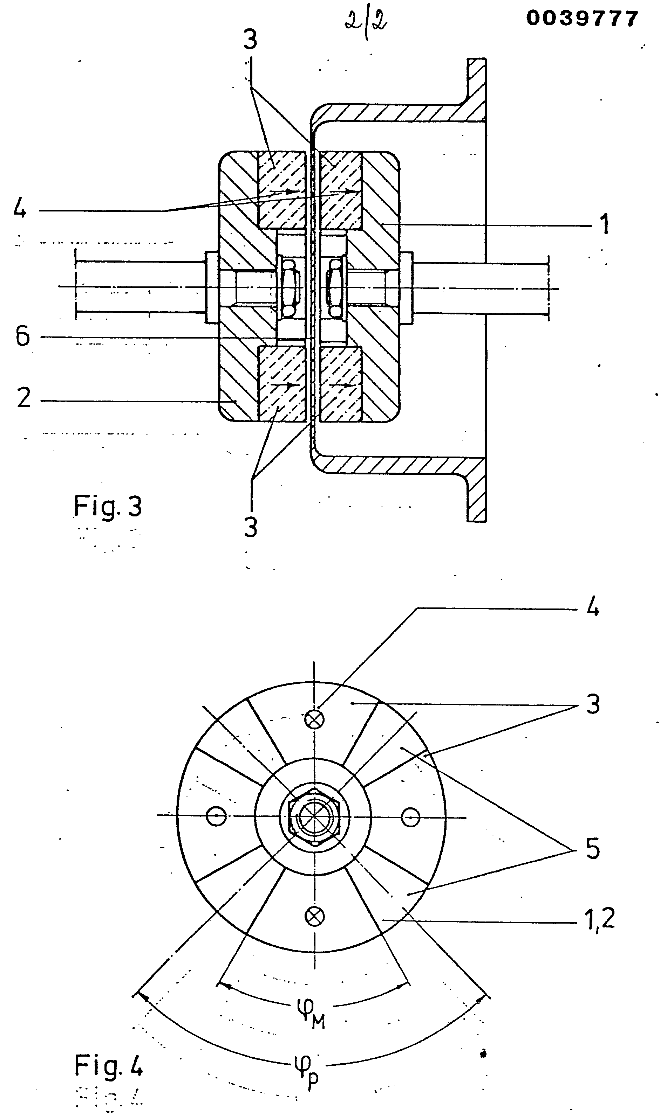

Bei dem in Figuren 3 und 4 dargestellten Beispiel einer Stirndrehkupplung stehen die Dauermagnete 3 auf den Kupplungsteilen 1 bzw. 2 jeweils wieder unter Bildung von Zwischenräumen 5 in Umfangsrichtung im Abstand zueinander, wobei die tatsächliche Polbedeckung $\varphi_M$ wiederum kleiner ist als der Polteilungswinkel $\varphi_p$.

Thyssen Edelstahlwerke
Aktiengesellschaft

Ansprüche

1.  Synchronkupplung, bestehend aus zwei mit Dauermagneten bestückten, im Abstand voneinander angeordneten, relativ zueinander
drehbaren Teilen, von denen eines mit dem Antrieb und das andere
mit dem Abtrieb verbunden ist, dadurch gekennzeichnet, daß die
tatsächliche Polbedeckung $\varphi_M$ der Teil (1, 2) mit Dauermagneten
(3) kleiner ist als der Polteilungswinkel $\varphi_p = \dfrac{360^0}{2p}$ mit p als
Poolpaarzahl.

2.  Synchronkupplung nach Anspruch 1 mit einem Spaltrohr aus
elektrisch nicht leitendem Material, gekennzeichnet durch ein Polbedeckungsverhältnis von

$$3/5 \leqq \varphi_p/\varphi_M \leqq \frac{4}{5}.$$

3.  Synchronkupplung nach Anspruch 1 mit einem Spaltrohr aus elektrisch
leitfähigem Material, gekennzeichnet durch ein Polbedeckungsverhältnis von

$$\frac{2}{5} \leqq \varphi_p/\varphi_M \leqq 3/5.$$

Fig. 1

Fig. 2

Fig. 3

Fig. 4